Europäisches Patentamt

European Patent Office

Office européen des brevets

(19)

(11) Veröffentlichungsnummer: **0 176 623**
**A1**

## (12) EUROPÄISCHE PATENTANMELDUNG

(21) Anmeldenummer: 84113798.7

(22) Anmeldetag: 15.11.84

(51) Int. Cl.⁴: **G 02 B 6/28**
**G 02 B 6/38**

(30) Priorität: 22.06.84 DE 3422972

(43) Veröffentlichungstag der Anmeldung:
09.04.86 Patentblatt 86/15

(84) Benannte Vertragsstaaten:
BE CH DE FR GB IT LI LU NL

(71) Anmelder: Quante Fernmeldetechnik GmbH
Uellendahler Str. 353
D-5600 Wuppertal 1(DE)

(72) Erfinder: Bauer, Manfred
Hasseler Strasse 17
D-4020 Mettmann(DE)

(72) Erfinder: Maczewski, Willi
Werlé Strasse 47
D-5600 Wuppertal 2(DE)

(74) Vertreter: Mentzel, Norbert, Dipl.-Phys. et al,
Patentanwälte Dipl.-Phys. Buse Dipl.-Phys. Mentzel
Dipl.-Ing. Ludewig Unterdörnen 114
D-5600 Wuppertal 2(DE)

(54) Vorrichtung zum Positionieren und Fixieren von Glasfasern, sog. Glasfaserarray.

(57) Bei einer Vorrichtung zum definierten Positionieren und Fixieren von Glasfasern (53, 62) wird ein zweiteiliger Halter (20) verwendet, dessen beide Halterteile (21, 22) Berührungsbereiche (25, 51) mit Profilierungen aufweisen, die für eine definierte Lage der Glasfasern (53, 62) zueinander zu sorgen haben. Für eine einfache Herstallung des Halters (20) und eine einwandfreie Positionierung der Fasern wird vorgeschlagen, die Berührungsbereiche der beiden Halterteile in Form zueinander parallel verlaufender Stufen (28, 38) auszubilden. Die Stoßflächen der Stufen erstrecken sich in Ver-laufsrichtung der Glasfasern und stehen in seitlichem Abstand zueinander. Sie erzeugen zusammen mit den angrezenden Absatzflächen einen zweifach längsgeteilten Kanal (54), der das ganze Bündel der Glasfasern einheitlich umschließt. Die beiden Halterteile (21, 22) sind mit ihren Stoßflächen im Sinne einer Verengung der Kanalbreite gegeneinander querverschiebbar. Stoßen die Glasfasern aneinander, so werden die beiden Halterteile aneinander fixiert.

FIG.12

PATENTANWÄLTE · 0176623

DIPL.-PHYS. **BUSE** · DIPL.-PHYS. **MENTZEL** · DIPL.-ING. **LUDEWIG**
Unterdörnen 114 · Postfach 200210 · 5600 Wuppertal 2 · Fernruf (0202) 557022/23/24 · Telex 8591606 wpat

56                                 **5600 Wuppertal 2, den**

Kennwort: "Glasfaserarray"

Firma Wilhelm Quante Spezialfabrik für Apparate der
Fernmeldetechnik GmbH. & Co., Uellendahler Str. 353,
56oo Wuppertal 1

---

Vorrichtung zum Positionieren und Fixieren von Glasfasern,
sog. Glasfaserarray

---

Die Erfindung richtet sich auf eine Vorrichtung der im
Gattungsbegriff des Anspruches 1 genannten Art. Bei Signalübertragung von Licht in Glasfasern entsteht häufig das
Problem, eine Anzahl von Glasfasern auf sehr engem Raum
von nur wenigen Zehntel Millimetern exakt zu justieren
und zu fixieren. Eine Verwirklichung davon ist ein sog.
Wellenlängen-Multiplexer, der in verschiedenen Glasfasern
geführtes Licht unterschiedlicher Wellenlänge in eine
einzige Glasfaser optisch einkoppelt. Man kann hierzu
ein optisches Prismen-Gitter verwenden, muß aber diesbezüglich die Stirnflächen der Glasfasern exakt positionieren.
Die entsprechenden Bedingungen und Maßnahmen ergeben sich
bei einem Wellenlängen-Demultiplexer, wo das aus einer
Glasfaser kommende Licht, nach Wellenlängen getrennt,
in mehrere andere Glasfasern überführt werden soll.

Für die genaue Justierung und Fixierung der Glasfasern
verwendete man einen zweiteiligen Halter, dessen beide
Teile in ihren Berührungsbereichen Profilierungen in Form
einer Schar von parallelen

**0176623**

Rinnen aufwiesen, deren jede zur Anordnung eines Glasfaserendes diente. Die Rinnen mußten sowohl hinsichtlich ihrer
Weite als auch ihrer gegenseitigen Anordnung exakt ausgebildet sein, denn nur dann war die erforderliche genaue
Position der Glasfaserstirnflächen in einer gemeinsamen
Ebene bezüglich des Prismen-Gitters möglich. Die genaue
Herstellung solcher Führungskonturen ist sehr umständlich
und insbesondere kostspielig. Dennoch treten unvermeidlich
Toleranzen in der Dimension und Lage solcher Führungskonturen auf, wie auch Abweichungen im Durchmesser der Glasfasern zu berücksichtigen sind. Es ist technisch sehr
aufwendig, solche Fehler zu korrigieren und die Glasfasern
entsprechend den jeweiligen Erfordernissen zu justieren und
zu fixieren. Dabei sind sehr hohe Anforderungen an die
präzise Lage und die optische Güte der Stirnflächen
der einzelnen Glasfasern zu stellen.

Der Erfindung liegt die Aufgabe zugrunde, eine preiswerte
Vorrichtung der im Gattungsbegriff des Anspruches 1
genannten Art zu entwickeln, die exakt, zuverlässig, einfach und schnell die einzelnen Glasfasern in der erforderlichen Weise zueinander positioniert.

Dies wird erfindungsgemäß durch die im Kennzeichen des
Anspruches 1 angeführten Maßnahmen erreicht. Durch die
Stoßfläche der im Berührungsbereich ausgebildeten Stufe
in jedem Halterteil entstehen jeweils zueinander höhenversetzte ebene Absatzflächen, denen eine mehrfache Funktion
zukommt. Eine besondere, die Erfindung kennzeichnende
Funktion der Absatzflächen besteht darin, daß sie zusammen
mit den angrenzenden Stoßflächen der Stufe jeweils einen
Formteil für einen das ganze Bündel der zu kuppelnden
Glasfaserenden gemeinsam umschließenden Kanal bilden.
Eine kostspielige, umständliche und mit Fehlern behaftete Herstellung von einzelnen Konturen für die verschiedenen Glasfasern entfällt. Die Herstellung einer Stufe zwischen ebenen Absatzflächen nach der Erfindung ist demgegenüber sehr schnell und billig herzustellen. Eine weitere Funktion der Absatzflächen besteht darin, anschlagartig wirksam zu sein, um die Kanalhöhe bei zusammengedrückten Halterteilen zu bestimmen. Dadurch wird festgelegt, in wievielen Lagen die Glasfasern im Bündel innerhalb des Kanals übereinander liegen können. Für die Verwendung bei einem Glasfaserarray für Wellenlängen-Multiplexer- bzw. Demultiplexer wird auf diese Weise für eine einlagige Anordnung der Glasfaserenden gesorgt. Dazu ist es lediglich erforderlich, die Stufenhöhe, also die Höhe der Stoßfläche, entsprechend dem Durchmesser der abgemantelten Glasfaserenden zu bemessen.

Eine dritte, für die Erfindung spezifische Funktion der Absatzflächen liegt darin, daß sie während der letzten Phase der Glasfaser-Montage zur gegenseitigen Führung bei ihrer Querverschiebung dienen. Die Absatzfläche des einen Halterteils gleitet längs derjenigen des Gegen-Halterteils. Die zugehörige Stoßfläche der Stufe wirkt dabei wie ein Antriebsmittel, um die einzelnen Glasfasern im Bündel immer enger aneinanderzuführen, bis sie schließlich mit ihren Konturen aneinander stoßen. Die Absatzflächen dienen bei dieser Zusammenschiebung der Glasfasern als seitliche Führungsflächen, die ein Ausbrechen der Glasfasern in eine "falsche Richtung" verhindern. Wenn sich die Glasfaserenden konturmäßig berühren, liegt die Endposition der Glasfaserenden vor, die nur noch von ihrem Faserquerschnitt bestimmt ist. Die Stirnflächen der Glasfaserenden nehmen daher automatisch eine zueinander präzise Position ein. Die Glasfaserenden justieren sich gegenseitig. Die Stufe selbst hat keinen Einfluß auf den gegenseitigen Abstand der Glasfasern in der Endstellung der beiden Halterteile.

Wegen der Selbstjustierung durch ihre gegenseitige
Berührung haben die Glasfasern einen exakten geraden Verlauf, liegen zueinander äquidistant und befinden sich
insbesondere im kleinstmöglichen Abstand zueinander.
Durch die ebenen Absatzflächen ist weiterhin gewährleistet, daß die Stirnflächen der Glasfaserenden genau in
einer gemeinsamen Ebene liegen und sich daher auf ein
Zehntel der Wellenlänge polieren lassen.

Abgesehen von den geringen Fertigungskosten und bequemer
Herstellung zeichnet sich die erfindungsgemäße Vorrichtung
auch noch dadurch aus, daß verschiedene Typen von Glasfasern miteinander gekoppelt werden können, sofern sie
denselben Manteldurchmesser aufweisen; so können z.B. Monomode-
Fasern mit Gradientenindex-Fasern kombiniert werden.

Weitere Maßnahmen und Vorteile der Erfindung sind aus
den Unteransprüchen, der Beschreibung und den Zeichnungen
entnehmbar. In den Zeichnungen ist die Erfindung in einem
Ausführungsbeispiel dargestellt. Es zeigen:

Fig. 1 in perspektivischer Ansicht einen mit der erfindungsgemäßen Vorrichtung ausgerüsteten Multiplexer bei geöffnetem Gehäuse,

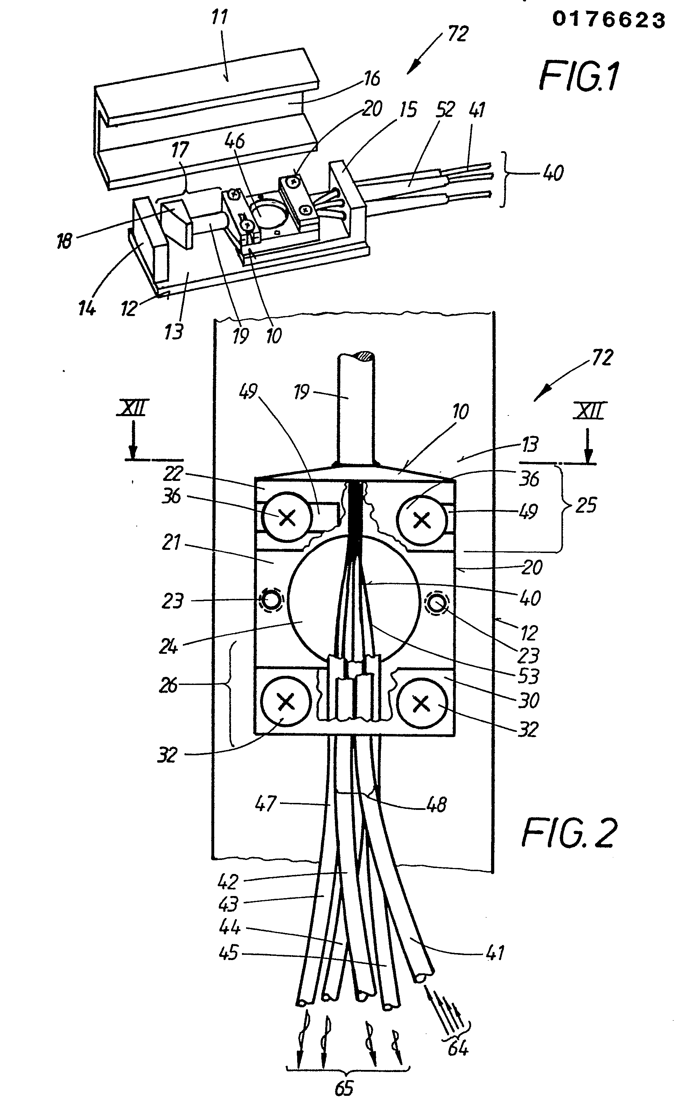

Fig. 2 in etwa vierfacher Vergrößerung die Draufsicht
auf den mittleren Teil des Multiplexers von
Fig. 1 bei geöffnetem Gehäuse,

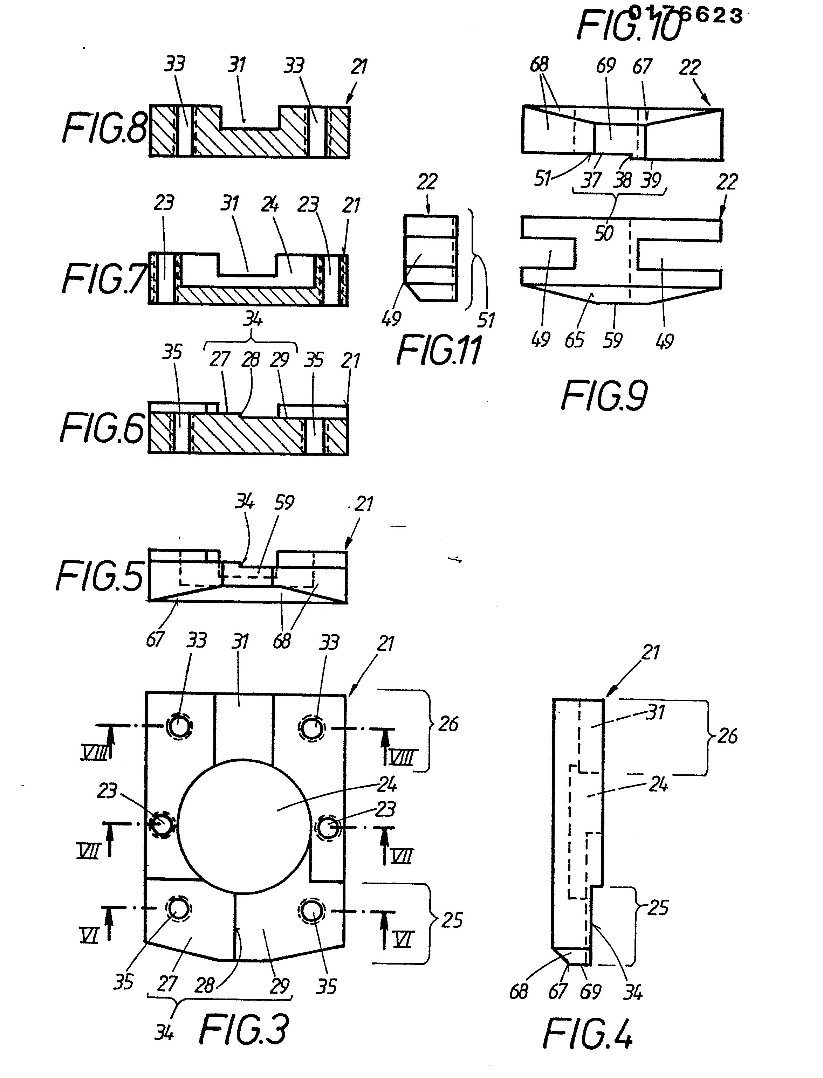

Fig. 3 und 4 die Draufsicht bzw. Seitenansicht eines
unteren Halterteils der in Fig. 2 verwendeten
Vorrichtung,

Fig. 5 die Endansicht des unteren Halterteils von Fig. 3,

Fig. 6, 7 und 8 die Schnittansicht durch den unteren
Halterteil längs der Schnittlinie VI-VI,
VII-VII bzw. VIII-VIII von Fig. 3,

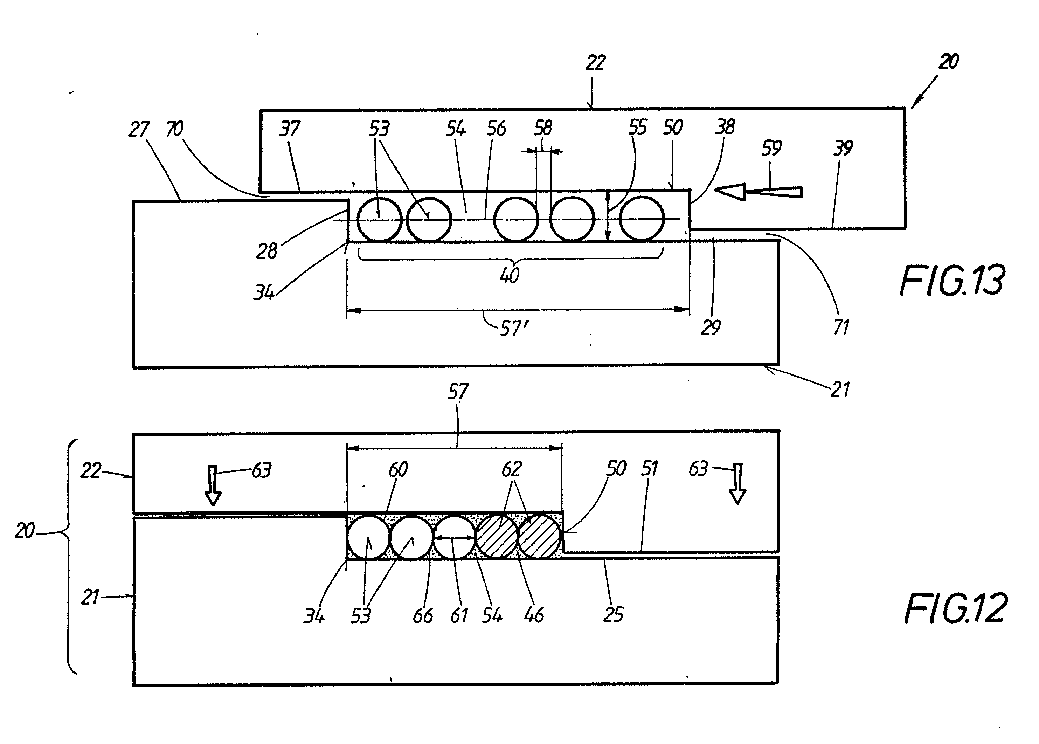

Fig. 9, lo und 11 die Draufsicht, Endansicht bzw.
Seitenansicht eines bei der Vorrichtung in
Fig. 2 verwendeten oberen Halterteils,

Fig. 12 in starker Vergrößerung die Endansicht wichtiger
Bestandteile der in Fig. 2 verwendeten Vorrichtung
nach der Erfindung, und zwar in Blickrichtung
der Schnittlinie II-II von Fig. 2, und

Fig. 13 eine der Fig. 12 entsprechende Endansicht
in einer vorausgehenden Arbeitsphase bei der
Montage der Bestandteile.

Fig. 1 zeigt die Anwendung der erfindungsgemäßen Vorrichtung
lo bei einem Demultiplexer 72, der zwei Gehäuseteile 11, 12
umfaßt, von denen der eine aus einer Bodenwand 13 und Endwänden 14, 15 besteht, während der andere Gehäuseteil 11
ein U-Profilstück ist, welches in zusammengebautem Zustand den erstgenannten Gehäuseteil 11 in seinem U-Raum 16
aufnimmt. Der Gehäuseteil 12 dient zur Befestigung verschiedener, die Vorrichtung lo kennzeichnender Bauteile,
zu welchen, neben Montageelementen, ein zweiteiliger Halter 2o gehört. Beim dargestellten Demultiplexer 72 ist
am Halter 2o eine optische Einrichtung 17 angeschlossen,
die hier ein Prismen-Gitter 18 und eine Gradienten-Index-
Linse 19 umfaßt, welche über optische Kleber miteinander
verbunden sind.

Das Aussehen des Halters 2o ist am besten aus den Fig. 2

0176623

bis 11 zu erkennen. Der Halter 2o umfaßt zwei wesentliche Halterteile 21, 22, von denen der eine als eine Grundplatte 21 ausgebildet ist, die an der Bodenwand 13 des Gehäuses 12 befestigt ist und zu diesem Zweck Gewindebohrungen 23 aufweist. In der mittleren Zone besitzt die Grundplatte 21 eine Aussparung 24, die hier zylindrisch ausgebildet ist. Die beiden Plattenenden 25, 26 haben zueinander sehr unterschiedliche Aufgaben zu erfüllen.

Das eine Plattenende 26 wirkt mit einer Brücke 3o nach Art einer Leitungsklemme zusammen, um eine ganze Schar von unabgemantelten Glasfaserleitungen 41 bis 45 an der Grundplatte 21 festzulegen. Dazu besitzt das Plattenende 26 eine Rinne 31, die ausreichend groß bemessen ist, um die Leitungsschar 41 bis 45 in mehreren übereinanderliegenden Lagen 47, 48 aufzunehmen. Die Glasfaserleitungen 41, 42 liegen in einer oberen Lage 48, während die untere Lage 47 von den Leitungen 43, 44, 45 gebildet wird. Die Brücke 3o kann glattflächig ausgebildet sein und ist über endseitige Schrauben 32 in Gewindebohrungen 33 der Grundplatte 21 festgeschraubt.

Das andere Plattenende 25 der Grundplatte 21 besitzt auf seiner nach oben gekehrten Seite einen besonders ausgebildeten Berührungsbereich, der in Form einer einzelnen Stufe 34 ausgebildet ist, welche mit ihrer vertikal zur Plattenebene verlaufenden Stoßfläche 28 zwei zueinander parallele höhenversetzte ebene Absatzflächen 27, 29 voneinander scheidet. In diesem Berührungsbereich 25 besitzt die Grundplatte 21 zwei weitere Gewindebohrungen 35, die zur Schraubaufnahme von Klemmschrauben 36 dienen.

Am Berührungsbereich 25 der Grundplatte 21 ist als Gegen-Halterteil eine Klemmleiste 22 angeordnet, die an ihren beiden Enden mit je einem querverlaufenden Schlitz 49 versehen ist. Die im Gebrauchsfall der Grundplatte 21 zugekehrte Seite der Klemmleiste 22 bildet einen Berührungsbereich 51, der in Form einer Stufe 5o ausgebildet und zu der Stufe 34 konform gestaltet ist. Die Stufe 5o umfaßt eine vertikale Stoßfläche 38, die zwei horizontal verlaufende, ebene Absatzflächen 37, 39 voneinander scheidet, die,entsprechend der Stoßflächen-Höhe,zueinander höhenversetzt verlaufen. Zu ihrer Dimensionierung und ihrem Gebrauch wird auf die Fig. 12 und 13 verwiesen.

Das Ausführungsbeispiel nach den Zeichnungen zeigt eine als 5-Faser-Array ausgebildete Vorrichtung 1o, welche ein Bündel 4o mit fünf Glasfasern 53 aufzunehmen in der Lage ist. Die dabei verwendeten Leitungen 41 bis 45 sind mit mehrfachen Schutzhüllen versehen, die in diesem Text als "Ummantelung" bezeichnet werden, die die eigentliche Glasfaser umgeben. Dies sind in der Regel zwei Kunststoffhüllen, sie werden als "Primär-Coating" und "Sekundär-Coating" bezeichnet. Der Außendurchmesser der eigentlichen Glasfaserleitung beträgt typischerweise 125 $\mu$m. Die Eigenschaften solcher Glasfasern zur Leitung von Lichtsignalen sind hinlänglich bekannt.

Wie Fig. 1 verdeutlicht, wird um die Glasfaserleitungen 41 bis 45 jeweils eine Knickschutztülle 52 gelegt und die Leitung mit dieser durch eine zugehörige Öffnung in der Endwand 15 des Gehäuseteils 12 hindurchgeführt. Zur weiteren Montage des Glasfaserarrays 2o werden die

0176623

Glasfaserenden 53 bis auf die eigentliche Glasfaser abisoliert, d.h. sowohl von dem Sekundär-Coating als auch dem Primär-Coating befreit. Dann werden die Faserenden auf die Grundplatte 21 des Glasfaserarrays aufgelegt, nachdem die Brücke 3o und die Klemmleiste 22 entfernt worden sind. Die noch mit der Ummantelung versehenen anschließenden Abschnitte der Glasfaserleitungen 41 bis 45 werden dann in die Rinne eingelegt, welche im Beispiel etwa 1,4 m Tiefe und 3,5 mm Breite aufweist und es gestattet, die Glasfaserleitungen in zwei Lagen 47, 48 übereinander anzuordnen, wie bereits erwähnt wurde. Dann wird die Brücke 3o mittels der Schrauben 32 festgezogen und dadurch die Leitungen 41 bis 45 an ihrem Sekundär-Coating festgeklemmt. Die mehrfachen Lagen 47, 48 sind deswegen günstig, weil dadurch der "Knickwinkel" im Glasfaserverlauf möglichst klein gehalten wird.

Die freien abisolierten Faserenden 53 werden vor die Stoßfläche 28 der Stufe 34 des Berührungsbereichs 25 der Grundplatte 21 gelegt und sortiert, damit keine Überkreuzungen stattfinden. Dann wird die Klemmleiste 22 darüber gelegt und mittels der Klemmschrauben 36 vorgedrückt. Dieser Zustand ist in Fig. 13 veranschaulicht, woraus sich folgender Tatbestand ergibt:

Sowohl die oberen Absatzflächen 27, 37 als auch die unteren Absatzflächen 29, 39 der beiden Stufen 34, 5o sind einander zugekehrt und können zur gegenseitigen Führung dienen. Die Stoßfläche 38 mit der oberen Absatzfläche 37 in der Klemmleiste 22 bildet die obere Hälfte eines in Verlaufsrichtung der Faserenden 53 sich erstreckenden Kanals 54, dessen untere Formhälfte von der entsprechenden Stoßfläche 28 und der unteren Absatzfläche 29 der Grundplatte 21 gebildet wird. Es entstehen den Kanal 54 längsteilende Fugen 7o, 71. Der Kanal 54 nimmt das ganze Bündel 4o der zu montierenden Glasfaserenden 53 auf. Dabei ist die Kanalhöhe 55 so bemessen, daß die Faserenden 53 in der strichpunktiert in Fig. 13 angedeuteten Horizontalebene 56 liegen, also nur eine einlagige Anordnung der Faserenden 53 vorliegt. In dieser anfänglichen Arbeitsstufe überlappt die Klemmleiste 22 nur teilweise die Grundplatte 21, weshalb zunächst eine verhältnismäßig große Kanalbreite 57' vorliegt, wo die Faserenden 53 in mehr oder weniger großen Abständen 58 zueinander liegen. Die Klemmschrauben 36 sind aber noch nicht festgezogen, weshalb die Klemmleiste 22 mit leichtem Spiel über dem Berührungsbereich 25 der Grundplatte 21 liegt. Die erwähnten Schlitze 29 der Klemmleiste 22 und die sie durchgreifenden Klemmschrauben 36 wirken dabei als Führungsmittel für eine durch den Pfeil 59 in Fig. 13 verdeutlichte Querverschiebung. Bei dieser Querverschiebung 59 werden die beiden Stoßflächen 28, 38 der beiden Stufen 34, 5o gegeneinander bewegt und wirken als Schubmittel für die im Kanal 54 aufgenommenen Faserenden 53, die nun zusammengeschoben werden. Durch die beiden den Kanal 54 mitformenden Absatzflächen 28, 37 wird bei diesem Zusammenschieben die ebene, einlagige Position 56 der Faserenden 53 aufrecht-erhalten. Die anfängliche Kanalbreite 57 verengt sich dadurch immer mehr. Die Endstellung dieser Querverschiebung 59 ist schließlich in Fig. 12 gezeigt, woraus folgendes zu entnehmen ist:

Die Klemmleiste 22 ist auf der Grundplatte 21 soweit verschoben worden, daß sich die Faserenden 53 beim Zusammenschieben mit ihrer Kontur 6o schließlich berühren. Die aneinanderstoßenden Faserenden 53 liegen somit engstmöglich, nämlich in einem dem Faserdurchmesser 61 entsprechenden Abstand zueinander. Dadurch befinden sich die Stirnflächen 62 in einer zueinander genau definierten Lage.

In dieser Endposition wird die Klemmleiste 22 an der Grundplatte 21 fixiert durch weiteres Anziehen der Klemmschrauben 36. Die Klemmleiste 22 wird dadurch im Sinne der Pfeile 63 gedrückt, wodurch die beiden Berührungsbereiche 25, 51 der Teile 21, 22 fest zusammengezogen werden. Der Kanal 54 hat sich nun auf eine Kanalendbreite 57 gemäß Fig. 12 verengt. Die Höhe der Stufen 34, 5o zwischen Klemmleiste 22 und Grundplatte 21 beträgt etwas weniger als einen Glasfaserdurchmesser.

Im vorliegenden Fall ist die Vorrichtung 1o ein einem Wellenlängen-Demultiplexer 72 benutzt. Wie in Fig. 2 durch Pfeile 64 veranschaulicht ist, soll über die Glasfaserleitung 41 Licht mit vier unterschiedlichen Wellenlängen in die Vorrichtung 1o eingespeist werden, wo es in der optischen Einrichtung 17, hier an dem Prismen-Gitter 18, wellenlängenmäßig in seine Lichtbestandteile zerlegt wird. Durch die sich gegenseitig positionierende exakte Lage der Stirnflächen 62 gelangt das zerlegte Licht, wellenlängenmäßig getrennt, in die vier anderen Glasfaserleitungen 42 bis 45, wo es abgeleitet wird. Dies ist in Fig. 2 durch Lichtpfeile 65 unterschiedlicher Länge verdeutlicht, wo durch eine Sinuswelle die unterschiedliche Wellenlänge des abgeführten Lichts symbolisiert ist.

Nach der endgültigen Festlegung der Klemmleiste 22 auf der Grundplatte 21 wird zur Fixierung der Faserenden 53 ein Gießharz eingeführt, und zwar in den Bereich der mittigen Aussparung 24 der Grundplatte 21. Dieses Gießharz dringt auch in die aus Fig. 12 ersichtlichen Zwickel 66 zwischen den zusammengedrückten Faserenden 53 ein und fixiert diese in der Endlage. Die aus dem Kanal 54 überstehenden Spitzen der Faserenden 53 werden sorgsam abgetrennt und das Stirnende des Glasfaserarrays 2o wird dann poliert. Dazu besitzt das Glasfaserarray eine besondere äußere Form.

Wie aus den Endansichten von Fig. 5 einerseits und Fig. lo andererseits zu entnehmen ist, ist dieser, künftig der optischen Einrichtung 17 zugekehrte Bereich als Pyramidenstumpf 67 gestaltet, der von einer rechteckigen Pyramiden-Grundfläche ausgeht. Dadurch besitzt der Pyramidenstumpf vier, einander ergänzende Pyramidenseitenflächen 68 und ein Pyramidenstumpfende 69. An diesem Pyramidenstumpfende 69 erscheinen die Stirnflächen 62 der Faserenden 53. Dort werden die vorerwähnten Polierarbeiten ausgeführt und die optische Einrichtung 17 angeordnet.

Im dargestellten Ausführungsbeispiel ist in dem Glasfaserarray 2o eine einlagige Anordnung der Glasfaserenden 53 durch entsprechende Bemessung der Stufenhöhe 55 erreicht worden. Es wäre auch denkbar, die Stirnflächen 62 in einer dichten Packung in zwei oder mehr Lagen übereinander anzuordnen. Dazu bedarf es lediglich einer entsprechenden Bemessung 55 der Stufenhöhe. Die Ausbildung eines Kanals 54 zur gemeinsamen Aufnahme eines Faserbündels 4o wird dabei ebenso genutzt, wie das Zusammenschieben der Fasern 4o bis zu der definierten Endposition der Glasfasern innerhalb einer solchen Stellung, wo sich die Fasern erfindungsgemäß gegenseitig auf engstmöglichem Raum äquidistant positionieren. Die erfindungsgemäße Vorrichtung lo kann auch für andere Zwecke angewendet werden, wo es auf eine definierte Position der Glasfasern ankommt, z.B. bei einem Glasfaserstecker, mit welchem sich zwei oder mehrere Bündel von Glasfasern optisch und mechanisch aneinander kuppeln lassen.

PATENTANWÄLTE          0176623

**DIPL.-PHYS. BUSE · DIPL.-PHYS. MENTZEL · DIPL.-ING. LUDEWIG**
Unterdörnen 114 · Postfach 200210 · 5600 Wuppertal 2 · Fernruf (0202) 557022/23/24 · Telex 8591606 wpat

56

**5600 Wuppertal 2, den**

Kennwort: "Glasfaserarray"

Firma Wilhelm Quante Spezialfabrik für Apparate der
Fernmeldetechnik GmbH. & Co., Uellendahler Str. 353,
56oo Wuppertal 1

---

A n s p r ü c h e :

1.) Vorrichtung (lo) zum Positionieren und Fixieren von
mehreren parallel zueinander angeordneten Glasfasern
(53), sog. Glasfaserarray, insbesondere Multiplexer
(72) zum Zusammenfügen bzw. Trennen von Licht unterschiedlicher Wellenlänge zwischen nebeneinanderliegenden Glasfaserenden,

mit einem zweiteiligen Halter (2o), dessen beide
Halterteile (21,22) miteinander Berührungsbereiche
(25,51) mit Profilierungen aufweisen,

d a d u r c h   g e k e n n z e i c h n e t ,

daß die Berührungsbereiche der beiden Halterteile (21,
22) nur je eine zueinander parallel verlaufende Stufe
(34,5o) aufweisen,

welche mit ihrer Stoßfläche (28,38) den jeweiligen
Berührungsbereich (25,51) in zwei zueinander höhenversetzte Absatzflächen (27,37; 29,39) aufteilen,

die Stoßflächen (28,38) der beiden Stufen (34,5o)
in Verlaufsrichtung der Glasfasern (53) sich erstrecken,
in seitlichem Abstand (57,57') zueinander liegen und
- zusammen mit angrenzenden Zonen der beiden zurückgesetzten Absatzflächen (29,37) - einen gemeinsamen
längsgeteilten (7o,71) Kanal (54) bilden,

der das ganze Bündel (4o) der zu positionierenden
Glasfasern (53) umschließt

und dessen Kanalhöhe (55) bei zusammengedrückten
Halterteilen (21,22) die Lagigkeit (56) in der
Anordnung der Glasfasern (53) bestimmt,

die beiden Halterteile (21,22) mit ihren Stoßflächen
(28,38) im Sinne einer Verengung der Kanalbreite (57')
gegeneinander querverschiebbar (59) sind, bis im
Bündel (4o) die Glasfasern (53) mit ihren Konturen (6o) aneinanderstoßen

und die Halterteile (21,22) in dieser verengten
Stellung festlegbar (36,63) sind.

2.) Vorrichtung nach Anspruch 1, dadurch gekennzeichnet,
daß die Kanalhöhe (55) bei zusammengedrückten Halterteilen (21,22) eine einlagige, ebene Anordnung (56)
der Glasfasern (53) bestimmt.

3.) Vorrichtung nach Anspruch 1 oder 2, dadurch gekennzeichnet,

daß der eine Halterteil aus einer Grundplatte (21)
besteht,

an derem einen Ende (25) der die eine Stufe (28)
aufweisende Berührungsbereich sich befindet

sowie Führungsmittel (36,49) zur Querverschiebung (59)
des die komplementäre Stufe (5o) aufweisenden Gegen-
Halterteils (22) angeordnet sind.

4.) Vorrichtung nach einem oder mehreren der Ansprüche 1 bis 3, dadurch gekennzeichnet,

daß der Gegen-Halterteil aus einer Klemmleiste (22) besteht und als zugehörige Quer-Führungsmittel Schlitze (49) besitzt,

die von in der Grundplatte (21) verschraubbaren Klemmschrauben (36) durchsetzt sind.

5.) Vorrichtung nach Anspruch 3 oder 4, dadurch gekennzeichnet, daß am anderen Ende (26) der Grundplatte (21) eine Leitungsklemme (3o,32) zur Festlegung der unabgemantelten Glasfasern (53) sitzt.

6.) Vorrichtung nach Anspruch 5, dadurch gekennzeichnet,

daß die Leitungsklemme aus einer Rinne (31) in der Grundplatte (21) und einer darüber gelegten, beidendig festschraubbaren Brücke (3o) besteht

und die unabgemantelten Glasfasern (53) zwischen der Rinne (31) und der Brücke (3o) in mehreren übereinanderliegenden Lagen (47,48) anordbar sind.

7.) Vorrichtung nach einem oder mehreren der Ansprüche 1 bis 6, dadurch gekennzeichnet, daß die Grundplatte (21) zwischen ihren beiden Enden (25,26) eine Aussparung (24) zur Aufnahme von Gießharz (46) aufweist und durch die Aussparung (24) das Bündel (4o) der abgemantelten Enden der Glasfasern (53) hindurchgeführt ist.

8.) Vorrichtung nach einem oder mehreren der Ansprüche 1 bis 7, dadurch gekennzeichnet, daß die Grundplatte (21) und die darüber gelegte Klemmleiste (22) an ihrem einen Ende sich pyramidenstumpfförmig (67) verjüngen und am Stumpfende (69) dieser Pyramide die Stirnflächen (62) der Glasfasern (53) einander berührend nebeneinander liegen.

PATENTANWÄLTE

**DIPL.-PHYS. BUSE · DIPL.-PHYS. MENTZEL · DIPL.-ING. LUDEWIG**

Unterdörnen 114 · Postfach 200210 · 5600 Wuppertal 2 · Fernruf (0202) 557022/23/24 · Telex 8591606 wpat

0176623

56           **5600 Wuppertal 2, den**

Kennwort: "Glasfaserarray"

Bezugszeichenliste:

| | |
|---|---|
| lo | Vorrichtung, Glasfaserarray |
| 11 | Gehäuseteil |
| 12 | Gehäuseteil |
| 13 | Bodenwand |
| 14 | Endwand |
| 15 | Endwand |
| 16 | U-Raum |
| 17 | optische Einrichtung |
| 18 | Prismen-Gitter von 17 |
| 19 | Gradienten-Index-Linse |
| 2o | Halter |
| 21 | Halterteil, Grundplatte |
| 22 | Gegen-Halterteil, Klemmleiste |
| 23 | Gewindebohrung |
| 24 | Aussparung |
| 25 | Plattenende, Berührungsbereich |
| 26 | Plattenende, Leitungsklemmenteil |
| 27 | obere Absatzfläche von 34 |
| 28 | Stoßfläche von 34 |
| 29 | untere Absatzfläche von 34 |
| 3o | Brücke, Leitungsklemmenteil |
| 31 | Rinne |
| 32 | Schraube |
| 33 | Gewindebohrung bei 26 |
| 34 | Stufe |
| 35 | Gewindebohrung bei 25 |
| 36 | Klemmschraube, Führungsmittel |
| 37 | obere Absatzfläche von 5o |

0176623

| | |
|---|---|
| 38 | Stoßfläche von 5o |
| 39 | untere Absatzfläche von 5o |
| 4o | Faserbündel |
| 41 | Glasfaserleitung |
| 42 | Glasfaserleitung |
| 43 | Glasfaserleitung |
| 44 | Glasfaserleitung |
| 45 | Glasfaserleitung |
| 46 | Gießharz |
| 47 | untere Leitungslage |
| 48 | obere Leitungslage |
| 49 | Schlitz, Führungsmittel |
| 5o | Stufe von 22 |
| 51 | Berührungsbereich von 22 |
| 52 | Knickschutztülle |
| 53 | Glasfaser, Ende der Glasfaser |
| 54 | Kanal |
| 55 | Kanalhöhe |
| 56 | Horizontalebene |
| 57 | Kanalendbreite |
| 57' | Kanalanfangsbreite |
| 58 | Abstand zwischen 53 |
| 59 | Querverschiebungs-Pfeil |
| 6o | Kontur von 53 |
| 61 | Faserdurchmesser von 53 |
| 62 | Stirnfläche von 53 |
| 63 | Zusammendrückpfeil |
| 64 | Pfeil für Zuleitungslicht |
| 65 | Pfeil für Ableitungslicht |
| 66 | Zwickel zwischen 53 |
| 67 | Pyramidenstumpf |
| 68 | Pyramiden-Seitenfläche |
| 69 | Pyramidenstumpfende |
| 7o | Fuge |
| 71 | Fuge |
| 72 | Multiplexer |

0176623

FIG.1

FIG.2

Quante

FIG.8

FIG.7

FIG.6

FIG.5

FIG.11

FIG.9

FIG.10

FIG.3

FIG.4

**FIG.13**

**FIG.12**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | US-A-4 318 873 (D.R. PORTER) * Spalte 5, Zeile 20 - Spalte &; Zeile 27; Anspruch * | 1 | G 02 B 6/28 G 02 B 6/38 |
| | --- | | |
| X | ELECTRONICS LETTERS, Band 16, Nr. 15, Juli 1980, Seiten 608,609; K. NOSU et al.: "Slab waveguide star coupler for multimode optical fibres" * Figur 2 * | 1,2 | |
| | --- | | |
| A | DE-A-2 856 770 (SIEMENS AG) * Figur 2, Anspruch 1 * | 2 | |
| | --- | | |
| A | IEEE TRANSACTIONS ON COMPONENTS, HYBRIDS AND MANUFACTURING TECHNOLOGY, Band CHMT-4, Nr. 4, Dezember 1981, Seiten 356-360, New York, US; R.A. DAVIS "Fiber optic star coupler for a 32-terminal data bus system" * Kapitel "Procedure" * | | RECHERCHIERTE SACHGEBIETE (Int Cl 4) G 02 B 6/28 G 02 B 6/38 |
| | ----- | | |

Der vorliegende Recherchenbericht wurde für alle Patentansprüche erstellt

| Recherchenort BERLIN | Abschlußdatum der Recherche 20-12-1985 | Prüfer FUCHS R |
|---|---|---|